# EUROPEAN PATENT SPECIFICATION

(11) **EP 3 684 971 B1**
(45) Date of publication and mention of the grant of the patent: **10.01.2024**
(21) Application number: 18796104.0
(22) Date of filing: 18.09.2018
(51) Int. Cl.: D06N 3/00, D06N 3/14, C09D 175/04

(54) **METHOD FOR PRODUCING A POLYURETHANE LAYER**
VERFAHREN ZUR HERSTELLUNG EINER POLYURETHANSCHICHT
PROCÉDÉ DE PRODUCTION D'UNE COUCHE DE POLYURÉTHANE

(30) Priority: 18.09.2017 BE 201705658
(43) Date of publication of application: 29.07.2020
(73) Proprietor: EOC Belgium NV, 9700 Oudenaarde (BE)
(72) Inventor: SPANHOVE, Peter, 9700 Oudenaarde (BE); DERDE, Anton, 9700 Oudenaarde (BE)
(74) Representative: Brantsandpatents bv
(86) International application number: PCT/IB2018/057157
(87) International publication number: WO 2019/053687

(56) References cited:
- WO-A1-98/08893
- US-A- 4 241 131

## Description

### TECHNICAL FIELD

The present invention relates to laminate products comprising a layer of a synthetic resin and a textile layer; and flexible textile materials provided on a macromolecular material.

### BACKGROUND

Replacing chlorinated compounds in materials and processes is a continuous necessity with a view to a more environmentally friendly economy. An important source of chlorinated compounds is polyvinyl chloride (PVC). PVC is used extensively in building materials and interior furnishings because of its competitive cost price and easily adjustable characteristics. In such materials, PVC mixtures comprising PVC, plasticizer and filler, known in the prior art as 'plastisol', are used in approximately equal parts. PVC entrance mats are made of a PVC bottom layer or base, with a textile layer at the top of the bottom layer, usually a carpet. A major shortcoming of such plastisols is the use of plasticizers. Plasticizers are often harmful to humans and the environment, but they can also migrate out of the plastisol, reducing the mechanical properties of the plastisol and even leaving marks on the environment they come into contact with - known as 'staining'. Replacing PVC in such mats with alternative plastics is inhibited by cost-related factors as well as by processes and product characteristics with insufficient performance.

In this context, WO 2008/103159 discloses a carpet tile produced with a polyurethane intermediate layer which adheres a reinforcing fibre material to a primary backing layer and which also adheres the carpet pile yarns to the primary backing layer. The technology also describes a method for producing such a carpet tile. The reinforcing fibre material is necessary for providing a sufficiently high dimensional stability. The need for such reinforcing materials is also emphasised in

US 2004/022994.

Carpets with polyurethane layers are also disclosed in WO-A-98/08893 and US-A-4241131.

In contrast to PVC materials, polyurethane does not contain chlorinated compounds, and essentially does not contain plasticizers. Avoiding chlorinated compounds offers an advantageous environmental aspect. The present invention therefore seeks to provide a new process for producing entrance mats on the basis of polyurethane, the choice of materials enabling cost-efficient production. In this respect, predefined product parameters must be met, such as good anti-slip behaviour, no stickiness, opaque, dimensionally stable, mechanical stability, elasticity, washability and good adhesion of an applied carpet.

In addition, the present invention seeks to provide a polyurethane process in which the already existing process infrastructure, mainly plastisol infrastructure, can be used for the production of polyurethane mats. Other goals are to provide a process in which at least the same production rates can be achieved by a sufficiently fast curing reaction; and that a less energy-intensive production process can be achieved.

### SUMMARY OF THE INVENTION

For this purpose, the invention provides a method for producing a polyurethane layer according to claim 1.

This offers the advantage that a simplified process is provided for producing polyurethane-based entrance mats. The current process can easily be carried out on existing infrastructure and with existing production techniques for the production of PVC-based entrance mats, subject to adapted dosing and mixing techniques. An important advantage of the process is that it allows the production of entrance mats with high firmness factors, taking into account the production techniques and the raw materials used. Moreover, the process allows sufficiently high production rates to be obtained which at least match those of the classic plastisol process. Also provided are measures for avoiding premature curing of the reactive polyurethane gel.

In a second aspect, the invention provides a polyurethane layer, preferably polyurethane mat, obtained according to a method according to the first aspect of the invention. This offers the advantage that an alternative is provided for PVC-based entrance mats, for example. In addition, the polyurethane mats are provided with good characteristics, such as dimensional stability, cost efficiency, good washability, good flexibility, good elasticity, mechanical stability, wear resistance, etc.

In a third aspect, the present invention provides a polyurethane mat according to claim 19.

### DETAILED DESCRIPTION OF THE INVENTION

Unless otherwise defined, all terms used in the description of the invention, including technical and scientific terms, have the meaning as commonly understood by the skilled person in the technical field of the invention.. For a better assessment of the description of the invention, the following terms are explained explicitly.

In this document, 'a' and 'the' refer to both the singular and the plural, unless the context clearly implies otherwise. For example, 'a segment' means one or more than segments.

When 'around or 'about' is used in this document with a measurable quantity, a parameter, a time period or moment in time, and the like, then variations are intended of +/- 20% or less, preferably +/- 10% or less, more preferably +/- 5% or less, even more preferably +/- 1% or less, and even more preferably approx. 0.1% or less than and of the cited value, if such variations are applicable in the described invention. However, it must be understood that the value of a quantity used where the term 'around' or 'about' is used, is itself specifically disclosed.

The terms 'comprise', 'comprising', 'consist of', 'consisting of', 'provided with', 'include', 'including', 'contain', 'containing', 'encompass', 'encompassing' are synonyms and are inclusive or open terms that indicate the presence of what follows, and which do not exclude or prevent the presence of other components, features, elements, members, steps, as known from or described in the prior art.

Quoting numerical intervals by the endpoints comprises all integers, fractions and/or real numbers between the endpoints, these endpoints included.

In a first aspect, the invention provides a method for producing a polyurethane layer, preferably polyurethane mat, comprising the steps:
(i) mixing at least a filler, at least a polyisocyanate, at least a polyol and at least a catalyst, thereby obtaining a reactive polyurethane gel;
(ii) dimensioning said reactive polyurethane gel into a reactive polyurethane film;
(iii) optionally, applying a textile layer on a first side of said reactive polyurethane film;
(iv) curing said reactive polyurethane film, thereby obtaining a polyurethane layer, preferably polyurethane mat.

The term 'curing' refers to a polymerisation reaction in which a thermoplastic or thermosetting polyurethane is formed.

More specifically, the present invention relates to the process described above, a crosslinker also being added to said reactive polyurethane gel. That is, a crosslinker is mixed with said filler, polyisocyanate and polyol to obtain a reactive polyurethane gel.

### 1. Composition

### Polyisocyanate

Said polyisocyanate comprises at least one organic polyisocyanate, selected from aromatic, cycloaliphatic and aliphatic isocyanates. Examples of suitable polyisocyanates comprise m-phenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate, naphthylene-1,5-diisocyanate, methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenylmethane-4,4'-diisocyanate, 4,4',4"-triphenylmethane triisocyanate, a polymethylene polyphenyl isocyanate (PMDI), toluene-2,4,6-triisocyanate and 4,4'-dimethyl diphenylmethane-2,2 ',5,5'-tetra isocyanate. Preferably, the polyisocyanate is diphenylmethane-4,4'-diisocyanate, diphenylmethane-2,4'-diisocyanate, PMDI, toluene-2,4-diisocyanate, toluene-2,6-diisocyanate or mixtures thereof. Diphenylmethane-4,4'-diisocyanate, diphenylmethane-2,4'-diisocyanate and mixtures thereof are generically referred to as 'MDI', and all can be used. Toluene-2,4-diisocyanate, toluene-2,6-diisocyanate and mixtures thereof are generically referred to as 'TDI' and can all be used. Modified diisocyanates can also be advantageously used, such as uretonimine-modified and polymeric or prepolymerised diisocyanates. These are prepolymers prepared by a stoichiometric excess of any of the foregoing polyisocyanates with an isocyanate-reactive compound, as described below, can also be used.

### Polyol

The polyol component comprises one or more isocyanate-reactive compounds. The isocyanate-reactive materials preferably comprise at least one high equivalent weight polyol having a hydroxyl equivalent weight of at least 125, in particular about 250 to about 4000, and preferably 500 to 1500, and most preferably 800 to 1200, or a mixture thereof.

The high equivalent weight polyol may be a polyether polyol, such as a polymer of ethylene oxide, propylene oxide, tetrahydrofuran or butylene oxide or a mixture of two or more thereof.

Particularly suitable polyether polyols comprise homopolymers of propylene oxide and random copolymers of a mixture of 70 to 100 wt% propylene oxide and 30 to 0 wt% ethylene oxide, in particular those statistical copolymers containing up to about 15 wt% polymerised ethylene oxide. These polyols are conveniently prepared by reacting the corresponding alkylene oxide with an initiator material such as a low molecular weight compound having two or more hydroxyl groups, preferably primary hydroxyl groups, and / or primary or secondary amine groups.

High equivalent weight polyols used in the reactive polyurethane gel preferably have an actual functionality of 1.6 to 4.0, preferably of 1.8 to 3.5. Crosslinkers have actual functionalities of more than 2. The high equivalent weight polyol can be a polycarbonate polyol such as a polycarbonate diol. The high equivalent weight polyol can be a polyalkylene such as a polyalkylene diol. Polyalkylene polyols and polyalkylene diols can be used in both saturated and unsaturated form. The high equivalent weight polyol can be a saturated or unsaturated polybutadiene polyol such as a saturated or unsaturated polybutadiene diol. Saturated diols show improved adhesion of the resulting polyurethane compared to polyolefins. Polyisocyanates preferably have a functionality of 1.9 to 3.1, in particular of 2.0 to 2.4 isocyanate groups per molecule.

The isocyanate index can also affect the number of crosslinks that are formed when the reactive polyurethane gel is cured, since a significant excess of polyisocyanate can result in the formation of isocyanurate, biuret or similar bonds. The isocyanate index (100 times the ratio of isocyanate groups to isocyanate-reactive groups in the composition) is preferably 90 to 125, and more preferably 100 to 115.

Polyester polyols such as polycaprolactone diol / dicarboxylic acid polyesters, e.g butanediol / adipate polyesters, can also be used as part or whole of the high equivalent weight polyol. Alternatively to butanediol, monoethylene glycol, diethylene glycol, hexane diol, etc. can also be used. Particularly advantageous are natural oil polyols (NOPs), such as castor oil, whether or not in modified form by ethoxylation and/or propoxylation. More specifically, polyester polyols can be derived from natural oils and recomposed into specific polyester polyols based on oleates, caprylates, palmitates, stearates, cocoates, tallanates, from diols and triols, with the fatty acids being saturated or unsaturated. These polyester polyols have a significantly hydrophobic character and are much more hydrolysis-resistant than conventional polyester polyols. Similarly, hydroxymethyl-containing polyester polyols can be used as part or whole of the high equivalent weight of polyol. Suitable hydroxymethyl-containing polyester polyols are described in detail in WO 04/096882 and WO 04/096883; their use in the preparation of certain polyurethane layers is described in WO 2006/047432.

### Chain extenders

One or more chain extenders are preferably present in the polyol blend. A `chain extender' refers to a material having two isocyanate-reactive groups per molecule and an equivalent weight per isocyanate-reactive group of about 30 to 399, preferably about 30 to 250. Preferably, said chain extenders have two hydroxyl groups. Examples of suitable chain extenders comprise ethylene glycol, diethylene glycol, triethylene glycol, tetraethylene glycol, propylene glycol, dipropylene glycol, tripropylene glycol, 1,3-propanediol, 2-methyl-1,3-propanediol, 2,2-butylethylpropanediol, 1,3-butanediol, 1,4-butanediol, 1,4-pentanediol, neopentyl glycol, 1,6-hexanediol, 1,4-cyclohexanedimethanol, ethanolamine, diethanolamine, methyldiethanolamine, phenyldiethanolamine, 1,4-dimethylolcyclohexane, diethyltoluenediamine, amine-terminated polyethers such as Jeffamine D-400, aminoethylpiperazine, 2-methylpiperazine, 1,5-diamino-3-methyl-pentane, isophoronediamine, ethylenediamine, hexanediamine, hydrazine, piperazine, mixtures thereof and the like. Amine chain extenders can be blocked, encapsulated or otherwise rendered less reactive. Preferred chain extenders are 2-methyl-1,3-propanediol, propylene glycol, dipropylene glycol, tripropylene glycol, low molecular weight polypropylene glycols, low molecular weight polytetramethylene glycols, butanediol and isomers thereof.

The high equivalent weight of polyol is generally made up of about 50 to about 100%, preferably from 75 to 95%, of the total weight of the isocyanate-reactive materials in the polyurethane film. One or more chain extenders make up 0 to 50%, preferably 5 to 25%, of the total weight of the isocyanate-reactive materials in the adhesive layer preparation.

### Crosslinker

It is within the scope of protection of the invention to comprise a crosslinker in the polyurethane gel. A 'crosslinker', for the purposes of this invention, is a compound having more than two isocyanate-reactive groups, e.g. three or more isocyanate-reactive groups, and an equivalent weight per isocyanate-reactive group of 1000 or less, and preferably of 250 or less. One or more crosslinkers are preferably encapsulated in a quantity of 0.1 to 5.0 wt%. The inventors found that sufficiently high proportions of filler using a crosslinker resulted in a sufficiently high dimensional stability of the resulting polyurethane layer. Examples of suitable crosslinkers are glycerol, sorbitol, sucrose, and other polyalcohols, trimethylolpropane, 1,2,6-hexanetriol, triethanolamine, pentaerythritol, ethylenediamines such as N,N,N',N'-Tetrakis(2-hydroxypropyl)ethylenediamine, alkoxylated homologues of the foregoing, such as ethoxylated and propoxylated homologues, and the like.

The average functionality (number of reactive groups per molecule) of the reactive materials (polyisocyanates and isocyanate-reactive materials) in the reactive polyurethane gel can in some cases significantly affect the dimensional stability of the polyurethane layer.

### Filler

The reactive polyurethane gel composition contains a filler for improving the mechanical properties of the polyurethane layer and for providing suitable physical properties such as flame resistance. Suitable fillers are calcium carbonate, barium sulphate and aluminium trihydrate or a combination of two of three of the aforementioned.

Because of the higher filler loads used in the preferred embodiments, the reactive polyurethane gel can be very viscous, and the temperature can rise during blending. With such a rising temperature the thermosetting reaction can start early. Therefore, the reactive polyurethane gel preferably contains at least one wetting agent and/or dispersant for the filler to manipulate the viscosity. Suitable wetting agents comprise ethoxylated phosphate esters, which are commonly available in an organic carrier. Examples of such wetting agents comprise those sold under the trade names BYK and MAPHOS^{™} and Code 5027. About 0.5 to 1.5 parts by weight of such a wetting agent per 100 parts by weight of isocyanate-reactive materials is generally effective.

Other additives may be used in the reactive polyurethane gel, such as flame retardants, carbon, pigments, reactive colour additives, antistatic agents, foaming agents, foam stabilisers, dispersants, reinforcing fibres, antioxidants, preservatives, acid scavengers, water absorbing or adsorbing agents, such as zeolites or silicas, and the like. Preferably, zeolite is added as water absorbent in a quantity of at least 1 wt%, said zeolite preferably having a pore size of 2 to 10 A, more preferably of about 3 to 5 A. According to a first embodiment, the method is carried out without incorporating a foaming or blowing agent in the composition, and where preferably an anti-foaming agent and/or degassing agents are added in order to obtain a very dense coating without air inclusions. According to an alternative embodiment, the method is carried out with a foaming or blowing agent, and air (and/or water) is added in a controlled manner in order to obtain a stable foam coating. Components are preferably dried to remove residual water. The reactive polyurethane gel composition preferably contains less than 0.1 wt% water, in order to avoid a gas-generating reaction with the polyisocyanate. In order to obtain a non-cellular polyurethane layer, the presence of surfactants and foam stabilisers is preferably also minimised or avoided altogether. In a preferred embodiment, an anti-foaming agent is also provided in said polyurethane gel. Thus, better mechanical properties of the polyurethane layer can be obtained.

The reactive polyurethane gel composition is preferably formed by a mixed polyol component, comprising most or even all isocyanate-reactive materials, an isocyanate component and a catalyst component. The catalyst component may also comprise polyols for easier mixing. In this way, a three-component system is provided. In addition, further additive streams can be provided for adding additives. Said three or more components are then mixed with the filler, for example, by means of a cooled screw blender. The filler is optionally pre-mixed in the polyol component, as well as the filler wetting agent and additives. The mixing of the filler in the polyol is preferably carried out under conditions of high shearing force, whereby the filler is finely and uniformly dispersed in the polyol. Catalysts can be provided with the polyol component or can be added as one or more separate streams. The invention also encompasses the concept in which filler is blended purely with the aforementioned reactive polyurethane composition. Thus significantly higher filler proportions can be achieved.

The present invention provides a method according to the first aspect of the invention, said filler being comprised in a quantity of 60 wt% to 85 wt% relative to the total weight of the reactive polyurethane gel.

Most preferably, said filler is comprised in a quantity of 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, or 80 wt%, 81 wt%, 82 wt%, 83 wt%, 84 wt%, or any amount in between. This offers the advantage that good mechanical properties can be obtained. The stiffness increases depending on the filler proportion.

The present invention provides a method according to the first aspect of the invention, said filler being selected from calcium carbonate, barium sulfate and aluminium trihydrate (ATH) or a combination of two or three of aforementioned fillers. Said filling means are provided in a quantity of at least 50 wt% relative to the total weight of fillers, and even more preferably at least 50 wt%, at least 60 wt%, at least 70 wt%, at least 80 wt%, at least 90 wt%, at least 95 wt%, at least 98 wt%, and even at least 99 wt%.

Multiple fillers can be mixed in combination with each other in the formulation. The combination of the fillers, in quantity and ratio with respect to each other, depends on the desired properties of the coating to be manufactured, such as density and fire-retardant properties.

In a first alternative embodiment, said filler comprises calcium carbonate (CaCO₃) in a quantity of at least 90 wt% relative to the total filler proportion, preferably at least 95 wt% and even more preferably in a quantity of 96 wt%, 97 wt%, 98 wt%, 99 wt% or 100 wt%, or any amount in between.

In an alternative or additional embodiment for obtaining high density polyurethane films, said filler comprises barium sulphate (BaSO₄) in a quantity of at least 10 wt% relative to the total filler proportion, preferably at least 20 wt%, and even preferably at least 50 wt%, and most preferably equal to 60 wt%, 70 wt%, 80 wt%, 90 wt% or 100 wt%, or any value in between.

In a second alternative embodiment, said filler comprises calcium carbonate (CaCO₃) and a flame retardant, together in a quantity of at least 90 wt% relative to the total filler proportion, preferably at least 95 wt% and even more preferably in a quantity of 96 wt%, 97 wt%, 98 wt%, 99 wt% or 100 wt%, or any amount in between. Preferably, said flame retardant is aluminium trihydrate (ATH), and calcium carbonate and aluminium trihydrate is comprised in a ratio of between 1:99 and 99:1. As an alternative or supplementary organic flame retardant, tris(1-chloro-2-propyl) phosphate (TCPP) can be selected. A person skilled in the art will, depending on the composition, be able to select other fire retardants or add them to the reactive polyurethane gel. Suitable flame retardants are aluminium trihydrate (ATH), melamine, diethyl bis(hydroxyethyl) aminomethyl phosphonate, tris(1,3-dichloro-2-propyl) phosphate (TDCP), tris(2-chloroisopropyl) phosphate (TCPP), Fyrol PNX: alkyl phosphate flame retardant based on oligomeric ethyl ethylene phosphate and tribromophenol.

In a preferred embodiment, the present invention provides a method according to the first aspect of the invention, said filler comprising a granulated material. In a preferred embodiment, said granulated material is comprised with an average particle size of at least 1 µm, as determined according to ASTM C136/C136M-14, preferably at least 5 µm, more preferably at least 10 µm and still more preferably at least 15 µm, and even more preferably at least 25 µm, at least 50 µm, at least 100 µm, at least 150 µm, at least 200 µm, at least 250 µm, or even at least 500 µm. In an additional or alternative embodiment, said granulated material is comprised with an average particle size of at least 1 mm, as determined according to ASTM C136/C136M-14, preferably at least 2 mm, more preferably at least 5 mm and even more preferably at least 10 mm. Particularly advantageously, a granulated material can be enclosed in said filler with a particle size of 10 mm, 11 mm, 12 mm, 13 mm, 14 mm, 15 mm, 16 mm, 17 mm or 18 mm, or any value in between. The inventors found that the enclosure of a granulated material with a large average particle size leads to a strong lowering of the viscosity of the reactive polyurethane gel, as a result of which the mixture is more easily homogenised without giving rise to a noteworthy increase in temperature. Avoiding a temperature rise during homogenisation is important to avoid an early polymerisation reaction.

In another embodiment, the present invention provides a method according to the first aspect of the invention, said filler comprising a granulated material, mixed in by means of a cooled screw blender. The inventors found that the enclosure of a granulated material with a large average particle size leads to a strong lowering of the viscosity of the reactive polyurethane gel, as a result of which the mixture is more easily homogenised without giving rise to a noteworthy increase in temperature. Avoiding a temperature rise during homogenisation is important to avoid an early polymerisation reaction.

In a preferred embodiment, the present invention provides a method according to the first aspect of the invention, said filler comprising at least a first and a second granulated material, and the particle size of said first granulated material being different from said second granulated material, and any further granulated materials. Thus, a bimodal or multimodal particle size distribution is obtained. Such an embodiment proves to be particularly advantageous, since in this way a much lower viscosity of the reactive polyurethane gel can be obtained with the same degree of filling, which comprises the above-mentioned advantages.

Preferably, the ratio of the average particle size of said first granulated material to the average particle size of said second granulated material is greater than 1.2, and preferably greater than 1.5 and more preferably greater than 2.0. Most preferably, said ratio is greater than 2.5, and even greater than 3.0 or even greater than 4.0. Specifically, said ratio is between 4.0 and 20.0, such as 5.0, 6.0, 7.0, 8.0, 10.0, 12.0, 14.0, 16.0 or 18.0, or any value in between. Most preferably, said filler comprises a plurality of granulated materials comprising a different particle size so as to obtain a multimodal particle size distribution. Preferably, 3, 4, 5, 6, 7 or 8 granulated materials with different particle sizes are mixed.

In a particularly preferred embodiment, the present invention provides a method according to the first aspect of the invention, said filler being mixed with a premix comprising the liquid components, including at least a polyisocyanate, at least a polyol, at least a catalyst and optionally one or more additives. The inventors surprisingly found that higher proportions of filler or fillers can be processed in shorter time spans into a reactive polyurethane gel when such a premix is formed beforehand. In addition, no appreciable loss of mechanical properties was observed with such increased proportions of filler. The mixing of filler and said premix takes place by means of a cooled screw blender, preferably with adjustable vacuum.

In a preferred embodiment, the present invention provides a method according to the first aspect of the invention, wherein said filler being is dimensioned after mixing with said premix into a reactive polyurethane film. Thus the granulated material is prevented from separating from the reactive polyurethane gel, as a result of which, for example, dosing on a conveyor belt is made more difficult. Therefore, no or fewer stabilising agents are required to keep the granulated material homogeneously distributed in the reactive polyurethane gel.

### Catalyst

In a preferred embodiment, the present invention provides a method according to the first aspect of the invention, wherein a catalyst is provided in said polyurethane gel in a sub-critical amount, sufficiently low so as not to cause a curing reaction at a temperature below 25°C, preferably at a temperature lower than 30°C, and more preferably at a temperature lower than 35°C or even lower than 40°C during a period of at least 10 minutes. Said sub-critical amount should preferably be understood as an amount of catalyst which is sufficiently low to cause no appreciable curing reaction at a temperature lower of 25°C, preferably at a temperature lower than 30°C, and more preferably at a temperature lower than 35°C or even lower than 40°C during a period of at least 10 minutes, and preferably at least 20 minutes and more preferably at least 30 minutes. Thus, the reactive polyurethane gel retains its liquid properties and thus remains processable to be dimensioned into, for example, a reactive polyurethane film.

The reactive polyurethane gel composition preferably contains one or more catalysts which promote the reaction of the polyisocyanate with the isocyanate-reactive materials. Suitable catalysts comprise tertiary amines, organometallic compounds or mixtures thereof. Specific examples thereof include di-n-butyl tin bis (mercaptoacetic acid isooctyl ester), dimethyltin dilaurate, dibutyltin dilaurate, dibutyltin diacetate, dibutyltin sulfide, tin octoate, lead octoate, iron acetyl acetonate, bismuth carboxylates, triethylene diamine, N-methyl morpholine, similar compounds and mixtures thereof.

The prior art describes slow-acting catalysts such as dialkyl metal sulfide catalysts described in U.S. Patent No. 5.646.195. In the context of the present invention, however, preference is given to tertiary amine catalysts, more specifically acid-free tertiary amine catalysts. These are highly reactive catalysts, such as, most preferably, DBU, short for 1,8-Diazabicyclo[5.4.0]undec-7-ene. In embodiments with catalyst loads according to the prior art, such catalysts result in a rapid curing reaction of the reactive polyurethane gel. The inventors surprisingly found that when using significantly lower amounts of the catalyst, more specifically of the amine catalyst, the reactivity is strongly suppressed at room temperature; however, the reactivity of the catalyst is not so much suppressed at elevated temperature. At room temperature, i.e. between 15°C and 30°C, hardly any crosslinking reaction could be observed for a period of 20 to 25 minutes when at most 0.1 wt% DBU was added to a diisocyanate-polyol mixture. By heating the mixture, for example on a heated conveyor belt, the crosslinking reaction is spontaneously started up with a characteristic temperature rise as a result. At this elevated temperature, the crosslinking reaction finally comes to completion. In this way, a 'latent catalyst' is provided by a reduced catalyst amount. The amount of catalyst in which no immediate crosslinking reaction occurs spontaneously is referred to in the context of the present invention by the term 'sub-critical amount' of catalyst. The 'sub-critical amount' of catalyst depends on the type of catalyst, the type of polyol and the type of polyisocyanate. A person skilled in the art can easily determine the sub-critical amount of catalyst for a specified catalyst, polyol and polyisocyanate by determining the amount of catalyst at which the temperature of the catalyst-polyol-polyisocyanate mixture remains below 35°C for at least 10 minutes, preferably below 30°C, assuming a starting temperature of 25°C, preferably 30°C. Preferably, the sub-critical amount of catalyst is equal to the amount of catalyst wherein the temperature of the catalyst-polyol-polyisocyanate mixture remains below 30°C for at least 15 minutes, and more preferably remains below 30°C for at least 20 minutes. More preferably, the sub-critical amount of catalyst is determined by the dielectric polarisation of the reactive polyurethane gel, for example by means of the SubCASE^{®} qualification methodology from Format Messtechniek GmbH. The decrease in the amount of polar functional groups in the reactive polyurethane gel leads to a decrease of the dielectric polarisation and in this way provides an indication of the degree of polymerisation of the reactive polyurethane gel. Preferably, the sub-critical amount of catalyst is smaller than the critical amount of catalyst, wherein the critical amount of catalyst is equal to the amount of catalyst at which the dielectric polarisation of the reactive polyurethane gel, after 10 minutes after the formation of the reactive polyurethane gel, has dropped to 75% of the dielectric polarisation of the reactive polyurethane gel upon formation of the reactive polyurethane gel.

In an alternative or additional embodiment, a catalyst can be selected due to its delayed action, also known as 'latent catalysts'. Preferably, a catalyst is selected which has both a latent effect and a sufficient hydrolytic stability. Such catalysts comprise, for example, specific tin catalysts such as dialkyltin mercaptide, with alkyl preferably being methyl, butyl or octyl, dialkyltin dithiocarboxylates. Particularly advantageous catalysts are dialkyltin bis(thioglycolate) catalysts because of the latent effect. Other examples of such catalysts are blocked tertiary amine catalysts such as, but not limited to, triethylenediamine (TEDA, also called 'DABCO' or '1,4-diazabicyclo[2.2.2]octane'), benzyldimethylamine (BDMA), bis(dimethylaminoethyl) ether ( DABCO BL11 or Niax A1), bis(2,2-morpholinoethyl) ether (DMDEE), DBU (1,8-Diazabicyclo[5.4.0]undec-7-ene), pentamethyldiethylenetriamine (PMDETA, Polycat 5), dimethylcyclohexylamine (DMCHA, Polycat 8), and dimethylethanolamine (DMEA), 2-((2-(Dimethylamino)ethyl)methylamino)ethanol, tetramethyliminobispropylamine, Jeffcat ZF10, DABCO NE300 / NE400 / 500 /600. Other examples of suitable catalysts are blocked tertiary amines and ammonium catalysts, such as preferably tertiary amine salts, also referred to as 'acid blocked tertiary amines', and preferably acid blocked homologues of the above-mentioned tertiary amines. A combination of an amine-type catalyst and an organometallic catalyst can also be used. Examples of acid-blocked tertiary amine catalysts include, but are not limited to, acid form of triethylenediamine (TEDA, also called 'DABCO' or 1,4-diazabicyclo[2.2.2]octane, e.g., DABCO 8154 and DABCO BL17), acid form of DBU (1,8-diazabicyclo[5.4.0]undec-7-ene), acid form of dimethylcyclohexylamine (DMCHA), and acidic, blocked form of dimethylethanolamine (DMEA).

In a specific embodiment, two or more catalysts are mixed in a sub-critical amount and/or latent catalysts to achieve a desired reactivity. The reactivity of a composite catalyst system can be determined by measuring the dielectric polarisation of the reactive polyurethane gel. According to the measured reactivity of the composite catalyst system, the proportion of one or more catalysts can be adjusted to adjust the reactivity of the composite catalyst system.

The use of a sub-critical amount of catalyst and/or of latent catalysts is advantageous because the reactive polyurethane gel can be intensively mixed and homogenised in this way, without the crosslinking reaction occurring spontaneously. Once the reactive polyurethane film is formed, by extrusion and/or distribution of the reactive polyurethane gel and by dimensioning on a conveyor belt with shearing blade, the composition can be warmed by heating plates or heated conveyor belt until the curing reaction is initiated. The catalyst is thus thermally activated. This is usually at a temperature higher than 40°C, higher than 60°C, or higher than 80°C and more preferably at a temperature between 70°C and 150°C, and most preferably at a temperature of 80°C, 85°C, 90°C, 95°C, 100°C, 110°C, 120°C or 130°C, or any temperature in between.

When a tertiary amine catalyst is used, the catalyst is preferably dosed in an amount of from about 0.01 to about 3 parts of tertiary amine catalyst per 100 parts of polyol, in order to obtain suitable curing. A combination of an amine-type catalyst and an organometallic catalyst can also be used.

In an embodiment, the present invention provides a method according to the first aspect of the invention, said catalyst being mixed in advance with said polyol. This makes it possible to work with a two-component system.

In a preferred embodiment, polyol, polyisocyanate and catalyst are mixed in three separate component streams. Thus, the reactive polyurethane gel composition is formed in a polyol component, which contains all the isocyanate-reactive materials, an isocyanate component and a catalyst component. In this way, a three-component system is provided. In addition, further additive streams can be provided for adding additives. Said three or more components are then mixed with the filler.

In a preferred embodiment, the present invention provides a method according to the first aspect of the invention, said catalyst being an amine catalyst, preferably an amidine. The inventors surprisingly found that these amine catalysts exhibit very good latent behaviour, while at the same time exhibiting high activity. More preferably, said amine catalyst is a carboxamidine, such as DBU. Such catalysts offer the further advantage of high reactivity after thermal activation, a phenomenon known as 'snap cure', and good latent behaviour when used in a sub-critical amount. This allows good use of the catalyst and a robust processing process.

In a preferred embodiment, the present invention provides a method according to the first aspect of the invention, said amine catalyst being comprised in an amount of 0.005 to 3.00 wt%, relative to the total amount of polyol, preferably between 0.05 and 2.50 wt%, and even more preferably in an amount of 0.10 to 1.00 wt%. Most preferably, said catalyst is comprised in an amount of from 0.10 to 0.50 wt%, and even more preferably from 0.10 to 0.30 wt%. Specifically, said catalyst is comprised in an amount of 0.10, 0.12, 0.14, 0.16, 0.18, 0.20, 0.22 or 0.24 wt% or any amount in between. Such amounts offer excellent latent catalytic behaviour and good activity after thermal activation.

### 2. Method

The present invention provides a method according to the first aspect of the invention, wherein said filler, said polyisocyanate and said polyol are mixed at a temperature lower than 40°C.

This means that the temperature of the mixture during mixing is lower than 40°C, preferably between 15°C and 35°C. More preferably, said mixing temperature is controlled between 15°C and 25°C, and even more preferably said mixing temperature is equal to 16°C, 17°C, 18°C, 19°C, 20°C, 21°C, 22°C, 23°C or 24°C or any temperature in between. A sufficiently low mixing temperature is particularly important to avoid premature activation of the catalyst, and accordingly to avoid premature curing of the reactive polyurethane gel. A sufficiently low mixing temperature can be achieved by cooling the raw materials, cooling the mixer, by a sufficiently low mixing speed, by adding viscosity reducers, wetting agents for the fillers, internal lubricants, or the like. Preferably, the dosing line downstream from the mixer is additionally cooled in order to keep the temperature of the mixture sufficiently low or to lower it additionally.

The present invention provides a method according to the first aspect of the invention, wherein said polyurethane gel is mixed with said filler in a mixer, and wherein said mixer is cooled by means of a cooling medium, and wherein said mixer is a screw blender. Thus, the frictional heat released at higher filling degrees can be adequately removed. Preferably, said mixer is double-walled and a cooling medium is circulated through the double-walled mixer so as to maintain the temperature of the mixer at a preset temperature, below 40°C. Said temperature is preferably kept between 15°C and 35°C. More preferably, said mixing temperature is controlled between 20°C and 30°C.

The present invention provides a method according to the first aspect of the invention, wherein said polyurethane gel is mixed in a cooled screw blender, and wherein said screw blender comprises one or more thermometers for monitoring the temperature. This offers the advantage that the mixing temperature during mixing can be monitored in a continuous manner, and that mixing speed can be adjusted during the mixing of said filler, polyol and polyisocyanate. Preferably, at least the outflow temperature is monitored. Even more preferably, said filler, polyol and polyisocyanate are mixed in a screw blender, the one or more thermometers for monitoring the mixing temperature being spread along the length of the screw blender for monitoring the temperature of the mixture in the screw blender.

In a preferred embodiment, the present invention provides a method according to the first aspect of the invention, wherein the screw speed of said screw blender is adjusted according to the temperature in said screw blender. This offers the advantage that an increasing temperature in the screw blender can be limited by lower shearing forces in the mixture of filler, polyol and polyisocyanate.

In a preferred embodiment, the present invention provides a method according to the first aspect of the invention, wherein a textile layer is applied to a first side of the obtained reactive polyurethane film, and wherein said textile layer is a carpet which can be free of a binding agent or pre-coating to at least temporarily attach the tufts to the substrate of the carpet. This offers the advantage that no additional pre-coating of the carpet has to be done, but that the carpet can be coated directly by means of the reactive polyurethane film. The coating thickness can vary from 0.1 to 3.0 mm depending on the desired product properties, preferably from 0.5 to 2.0 mm and even more preferably from 1.0 to 1.5 mm.

In a preferred embodiment, the present invention provides a method according to the first aspect of the invention, wherein said reactive polyurethane film is applied to a partially or fully cured polyurethane film, whereby a polyurethane double layer is obtained, and wherein aforementioned textile layer is applied to a first side of the obtained reactive polyurethane film. This offers the advantage that the composition and/or thickness of both polyurethane films can be provided differently, as a result of which preferably, but not limited to, said reactive polyurethane film is provided in order to obtain a good adhesion of the textile layer, while said partially or fully cured polyurethane film is provided with a maximum proportion of filler, to provide a visually good polyurethane layer as well as to ensure sufficiently good mechanical properties of the obtained layer, preferably polyurethane mat, such as good flexibility. Preferably, said reactive polyurethane film which is provided to obtain a good adhesion of the textile layer is provided with a thickness comprised between 0.10 and 1.00 mm, and more preferably between 0.25 and 0.75 mm and even more preferably between 0.30 and 0.50 mm. Preferably, said partially or fully cured polyurethane film is provided with a thickness comprised between 0.30 and 2.00 mm, and more preferably between 0.4 and 1.0 mm and even more preferably with a thickness of approximately 0.5 mm.

In a preferred embodiment, the present invention provides a method according to the first aspect of the invention, wherein no reinforcing layer is applied between said textile layer and said first side of the reactive polyurethane film, and wherein no reinforcing layer is applied to the side of the reactive polyurethane film located opposite said first side. The absence of a reinforcing layer, such as glass fibre fabric, polyester fibre cloth, graphite fibre cloth, carbon fibre cloth and the like, offers the advantage of good flexibility of the obtained polyurethane layer, preferably polyurethane mat, a simpler process and a better product quality due to reduced problems with adhesion of the reinforcing layer to the polyurethane and/or textile layer.

In an alternative embodiment, the present invention provides a method according to the first aspect of the invention, wherein one or more reinforcing layers are provided between said textile layer and said first side of the reactive polyurethane film, and/or on the side of the reactive polyurethane film located opposite said first side. When applying two polyurethane coating layers, the reinforcing fabric can be applied between the two polyurethane layers. Such reinforcement layers offer increased dimensional stability when the resulting polyurethane layer, preferably polyurethane mat, is provided in the form of polyurethane tiles. Preferably, a first reinforcing layer is provided between said textile layer and said first side of the reactive polyurethane film and a second reinforcing layer is provided on the side of the reactive polyurethane film located opposite said first side. Suitable reinforcement layers can be selected from the list comprising: glass fibre cloth, polyester fibre cloth, graphite fibre cloth, carbon fibre cloth and the like, and offer the advantage of good dimensional stability of the obtained polyurethane layer, preferably polyurethane mat.

In a preferred embodiment, the present invention provides a method according to the first aspect of the invention, wherein said polyurethane gel is further treated under vacuum in a screw blender before being dimensioned, preferably by means of a blade. This offers the advantage that volatile substances such as air, water and organic additives, can be partially or completely removed from the mixture. In this way, the resulting polyurethane layer, preferably polyurethane mat, displays a greatly reduced amount of air bubbles, or even no detectable amount of air bubbles, and greatly improved mechanical properties are obtained. Preferably, said polyurethane gel is treated at a negative pressure of at least 0.5 bar, and more preferably at least 0.8 bar and even at least 0.9 bar. Most preferably, said negative pressure is at least 0.95 bar. Moreover, the application of a controllable negative pressure allows a micro-foam layer to be provided on the surface in a controlled manner, so that a mattifying effect is created.

In a next step, the intensively mixed, reactive polyurethane gel is placed on a conveyor belt. Preferably, said conveyor belt is made of teflon or siliconised layer, e.g. paper layer, in order to obtain a good detachment after curing of the reactive polyurethane film.

In a preferred embodiment, the present invention provides a method according to the first aspect of the invention, wherein said reactive polyurethane gel is dimensioned into a reactive polyurethane film having a predetermined thickness by means of a shearing blade. This offers the advantage that a reactive polyurethane film can be obtained with a precisely set and uniform thickness.

Preferably, said conveyor belt is heated in successive sections which are adjustable in temperature to obtain a desired production speed. Preferably, said conveyor belt is heated, in several segments following the shearing blade, at a temperature between 40°C and 100°C to cause a heating of the reactive polyurethane film. This offers the advantage that the curing reaction takes place gradually and completely controlled.

By way of example, said conveyor belt is heated, in a first segment following the shearing blade, at a temperature between 50°C and 70°C to cause a heating of the reactive polyurethane film. More preferably, said conveyor belt is heated at a temperature of 55°C to 65°C. This offers the advantage that the curing reaction takes place gradually without completing.

In a next step, a textile layer is laid on the reactive polyurethane film. Depending on the reactivity of the polyurethane composition, of the catalytic system and of the set temperature, the textile layer is applied to the reactive polyurethane film, and optionally pressed into said reactive polyurethane film. Under the selected conditions, the reactive polyurethane film is not yet completely cured and a good connection can be achieved between the reactive polyurethane film and the textile layer. Preferably, said textile layer is pressed into said reactive polyurethane film with the aid of a roller, preferably with the aid of a first, a second roller or several rollers.

In a preferred embodiment, the present invention provides a method according to the first aspect of the invention, wherein said reactive polyurethane film is subsequently cured at a temperature between 70°C to 150°C, preferably between 90°C and 130°C. More preferably, said reactive polyurethane film is cured at a temperature between 100°C to 120°C. Most preferably, said reactive polyurethane film is cured at a temperature of 100°C, 102°C, 104°C, 106°C, 108°C, 110°C, 112°C, 114°C, 116°C, 118°C, 120°C or any temperature in between.

In a preferred embodiment the present invention provides a method according to the first aspect of the invention, wherein said reactive polyurethane film has a thickness between 0.5 mm and 3.0 mm, preferably between 1.0 mm and 2.0 mm. Even more preferably, said reactive polyurethane film has a thickness between 1.1 mm and 1.7 mm, and most preferably said reactive polyurethane film has a thickness of 1.10 mm, 1.20 mm, 1.30 mm, 1.40 mm, 1.50 mm or 1.60 mm, or any thickness in between. By choosing a suitable thickness of the reactive polyurethane film, sufficiently good mechanical properties can be obtained without thereby causing too much material consumption, and without making the surface weight of the obtained polyurethane layer, preferably polyurethane mat, unnecessarily high.

In a preferred embodiment, the present invention provides a method according to the first aspect of the invention, wherein said textile layer is a tufted, woven, knitted layer or a nonwoven. The cured polyurethane film serves as a binding material.

In a preferred embodiment the present invention provides a method according to the first aspect of the invention, wherein said textile layer is a tufted, woven, knitted layer or a nonwoven and wherein said textile layer is comprised of a material having a low melting point, but preferably higher than 100°C, preferably higher than 120°C and more preferably higher than 140°C. The lower process temperatures allow working with materials with a lower melting temperature compared to conventional plastisol (PVC) systems. Suitable materials comprise natural materials such as cotton, jute, flax, silk, etc. Suitable materials also comprise plastics such as polyethylene, polypropylene, polyester, polyamide, etc.

In a preferred embodiment, the present invention provides a method according to the first aspect of the invention, wherein said carpet is comprised of a polyester or a polyamide primary backing, and a pile yarn. The use of polyester or polyamide as a primary backing offers better adhesion to the cured polyurethane film, in contrast to other materials. Most preferably, said primary backing is made of polyester. This also offers an optimal adhesion of the pile yarn in the cured polyurethane film.

In a second aspect, the invention provides a polyurethane layer, preferably polyurethane mat, obtained according to a method according to the first aspect of the invention.

The density can easily be adjusted on the basis of the proportion of filler in the reactive polyurethane gel.

In a preferred embodiment, the present invention provides a polyurethane mat according to the second aspect of the invention, said polyurethane layer being provided as a foamed polyurethane layer and having a density between 50 kg/m³ and 2000 kg/m³, preferably located between 50 kg/m³ and 1500 kg/m³, preferably between 150 kg/m³ and 1200 kg/m³, preferably between 800 kg/m³ and 1100 kg/m³. The density can easily be adjusted on the basis of the proportion of filler in the reactive polyurethane gel and by means of the dosage of air. In a particular embodiment, said density is equal to 150 kg/m³, 200 kg/m³, 250 kg/m³, 300 kg/m³, 350 kg/m³, 400 kg/m³, 450 kg/m³, or 500 kg/m³, or any value in between. A sufficiently low density ensures a lighter end product, which is e.g. advantageous for transporting the end product.

In a preferred embodiment the present invention provides a polyurethane mat according to the second aspect of the invention, said polyurethane layer being provided as a foamed polyurethane layer and having a thickness between 0.5 mm and 15.0 mm, preferably between 1.0 mm and 8.0 mm. Even more preferably, said polyurethane layer has a thickness between 2.0 mm and 8.0 mm, and most preferably said polyurethane layer has a thickness of 4.0 mm, 5.0 mm, 6.0 mm, 7.0 mm or 8.0 mm, or any thickness in between.

The floor covering according to the invention has particular application in the residential and commercial carpet industry as well as in floor covering for recreational use, such as for use in ships and boats, cars, patios, artificial grass, etc. An application of particular interest is the entrance mats. Such entrance mats can be used advantageously at entrances and exits of buildings. The entrance mats according to the invention offer the advantage that they have good washability and can be washed and reused several times. In addition, the polyurethane layer on the underside of the entrance mat offers an ideal anti-slip layer. The entrance mats are usually rectangular or square but can have any suitable shape.

### 3. Polyurethane mat

In a third aspect, the present invention provides a polyurethane mat comprising:
(i) a polyurethane layer obtained by reaction of at least a polyisocyanate, at least a polyol and at least a catalyst, and comprising at least a filler; and
(ii) optionally, a textile layer on a first side of said polyurethane layer.

The present invention provides a polyurethane mat in accordance with the third aspect of the invention, said filler being comprised in a quantity of 60 wt% to 85 wt% relative to the total weight of the reactive polyurethane gel. Most preferably, said filler is comprised in a quantity of 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, or 80 wt%, 81 wt%, 82 wt%, 83 wt%, 84 wt%, or any amount in between. This offers the advantage that good mechanical properties can be obtained.

In a preferred embodiment, the present invention provides a polyurethane mat according to the third aspect of the invention, said filler comprising a granulated material. Preferably, said granulated material is comprised with an average particle size of at least 1 mm, as determined according to ASTM C136 / C136M - 14, preferably at least 2 mm, more preferably at least 5 mm and even more preferably at least 10 mm. Particularly advantageously, a granulated material can be enclosed in said filler with a particle size of 10 mm, 11 mm, 12 mm, 13 mm, 14 mm, 15 mm, 16 mm, 17 mm or 18 mm, or any value in between.

In a preferred embodiment, the present invention provides a polyurethane mat according to the third aspect of the invention, said filler comprising at least a first and a second granulated material, and the average particle size of said first granulated material being different from said second granulated material. Thus, a bimodal particle size distribution is obtained. Such an embodiment proves to be particularly advantageous, since in this way a very low viscosity of the reactive polyurethane gel can be obtained, which comprises the above-mentioned advantages. Preferably, the ratio of the average particle size of said first granulated material to the average particle size of said second granulated material is greater than 1.2, and preferably greater than 1.5 and more preferably greater than 2.0. Most preferably, said ratio is greater than 2.5, and even greater than 3.0 or even greater than 4.0. Specifically, said ratio is between 4 and 100, such as 5, 10, 15, 20, 25, 30, 35, 40 or 50, or any value in between.

In a fourth aspect the present invention provides a polyurethane mat, comprising a textile layer and a polyurethane mat according to the third aspect of the invention, said textile layer being comprised of a material having a low melting point, but preferably higher than 80°C, higher than 90°C and even higher than 100°C, preferably higher than 120°C and more preferably higher than 140°C. Such materials comprise natural materials such as cotton, jute, flax, silk, etc. Such materials also comprise plastics such as polyethylene, polypropylene, polyester, polyamide, etc. Because the reactive polyurethane gel according to the invention generally cures at temperatures lower than 100°C, materials with a lower melting point can be used for the textile layer. Said textile layer is also preferably comprised of a material with a melting point higher than 60°C, or even higher than 70°C and more preferably higher than 80°C. Thereby a good temperature stability is ensured when using said carpet. Such materials comprise natural materials and plastics such as polyesters and polyamides.

In a preferred embodiment, the present invention provides a polyurethane mat according to the third aspect of the invention, wherein said carpet is comprised of a polyester or a polyamide primary backing, and a pile yarn. The use of polyester or polyamide as a primary backing offers better adhesion to the cured polyurethane film, in contrast to other materials. Most preferably, said primary backing is made of polyester.

In a preferred embodiment, the present invention provides a polyurethane mat according to the third aspect of the invention, wherein no binder or pre-coating is comprised to at least temporarily adhere the tufts to the substrate of the carpet. This offers the advantage that no additional pre-coating of the carpet has to be done, but that the carpet can be coated directly by means of the reactive polyurethane film.

In a preferred embodiment, the present invention provides a polyurethane mat according to the third aspect of the invention, wherein said textile layer is provided on a polyurethane double layer, comprising two or even more polyurethane layers. Preferably, a first polyurethane layer is provided on aforementioned textile layer and a second polyurethane layer is provided on the opposite side of the first polyurethane layer.

Said first polyurethane layer can therefore provide a good adhesion of the textile layer, while said second polyurethane layer can be provided with a maximum proportion of filler, as well as to provide a visually good polyurethane layer. Preferably, said first polyurethane layer is provided with a thickness comprised between 0.10 and 1.00 mm, and more preferably between 0.25 and 0.75 mm and even more preferably between 0.30 and 0.50 mm. Preferably, said second polyurethane layer is provided with a thickness comprised between 0.30 and 1.00 mm, and more preferably between 0.4 and 0.6 mm and even more preferably with a thickness of approximately 0.5 mm.

### EXAMPLES AND REFERENCE EXAMPLES

The composition of the polyurethane coating layers with filler is shown in Table 1. The proportions of filler, more specifically chalk, are shown in Table 2 for Examples 2 to 5 according to the invention and according to Comparative Example 1 and Example 1 which is not part of the invention.

**Table 1. Composition of the polyurethane coating layers.**

| component | quantity / pbw ^{a} |
|---|---|
| high molecular polypropylene glycol | 88.0 |
| dipropylene glycol | 10.0 |
| alkoxylated polyol, hydroxyl number 990 mg KOH/g | 2.0 |
| wetting and dispersing agent for polyurethane systems | 1.0 |
| DBU catalyst | 0.2 |
| reaction product of 4,4'-methylenediphenyl diisocyanate and polyester polyol | 50.0 |
| chalk | 0-550 |
| zeolite | 2-10 |

| | |
|---|---|
| ^{a} parts by weight, relative to the total weight of the composition. | |

Depending on the application, dispersing agents, degassers, de-aerators, foam stabilisers, filler stabilisers, frothing agents, colourants, flame retardants, UV stabilisers, antioxidants, etc., can also be used.

Depending on the increasing chalk content, the specific coating properties will also change considerably, as shown in Table 2. The filler is mixed with a premix comprising the liquid components, being polyisocyanate, polyol, catalyst and additives. This allows to process higher filler proportions in shorter time spans into a reactive polyurethane gel. Mixing of filler and said premix is done by means of a screw blender with adjustable vacuum.

Subsequently, said premix was dimensioned into a reactive polyurethane film. Thus the granulated material is prevented from separating from the reactive polyurethane gel, as a result of which, for example, dosing on a conveyor belt is made more difficult. Therefore, no or fewer stabilising agents are required to keep the granulated material homogeneously distributed in the reactive polyurethane gel.

**Table 2. Physical properties and filling degrees of Examples 1-5 and Comparative Example 1.**

| | | **Exam ple 1** | **Example 2** | **Example 3** | **Example 4** | **Example 5** | **Comp. Example 1** |
|---|---|---|---|---|---|---|---|
| filler | pbw ^{a} | 100 | 200 | 300 | 400 | 500 | 0 |
| filler | % ^{b} | 40 | 57 | 67 | 73 | 77 | 0 |
| coating thickness | mm | 1.31 | 1.25 | 1.23 | 1.30 | 1.34 | 1.28 |
| coating density | kg/m ³ | 1400 | 1580 | 1690 | 1750 | 1790 | 1050 |
| tensile strength | MPa | 4.9 | 3.9 | 3.2 | 3.5 | 4.5 | 6.2 |
| tensile elongation | % | 420 | 240 | 160 | 77 | 25 | 460 |
| tensile modulus | MPa | 9.0 | 15 | 24 | 33 | 50 | 3.6 |
| tear strength | N/mm | 4.9 | 5.8 | 5.5 | 6.3 | 5.1 | 3.4 |
| Shore A hardness | - | 65 | 78 | 86 | 89 | 91 | 62 |
| Shore D hardness | - | 20 | 29 | 40 | 46 | 50 | 16 |

| | | | | | | | |
|---|---|---|---|---|---|---|---|
| ^{a} parts by weight, relative to the total weight of the composition. ^{a} wt%, relative to the total weight of the composition. | | | | | | | |

These experiments show an increase in density, stiffness and surface hardness with increasing degrees of filler, and a decreasing elasticity with increasing filling degree.

Despite significant changes in a number of properties, thanks to good mixing, distribution and reactivity, the strength properties of the coating remain largely intact.

## Claims

1. Method for producing a polyurethane layer, comprising the steps:
(i) mixing at least a filler, at least a polyisocyanate, at least a polyol and at least a catalyst in a cooled screw blender, said filler, said polyisocyanate, said polyol and said catalyst being mixed at a temperature lower than 40°C, thereby obtaining a reactive polyurethane gel, said filler being comprised in an amount of60 wt% to 85 wt%, relative to the total weight of the reactive polyurethane gel, said filler being selected from calcium carbonate, barium sulphate and aluminium trihydrate (ATH) or a combination of two or three of the aforementioned, and calcium carbonate, barium sulphate and/or aluminium trihydrate being provided in an amount of at least 50 wt% relative to the total weight of fillers;
(ii) dimensioning said reactive polyurethane gel into a reactive polyurethane film;
(iii) optionally, applying a textile layer on a first side of said reactive polyurethane film;
(iv) curing said reactive polyurethane film, thereby obtaining a polyurethane layer.

2. Method according to claim 1, said filler, said polyisocyanate, said polyol and said catalyst being mixed at a temperature between 15°C and 35°C.

3. Method according to at least one of claims 1 to 2, a strengthening layer being applied between said textile layer and said first side of the reactive polyurethane film, and no reinforcement layer being applied to the side of the reactive polyurethane film located opposite to said first side.

4. Method according to at least one of claims 1 to 3, said screw blender comprising one or more thermometers for monitoring the temperature.

5. Method according to at least one of claims 1 to 4, said screw blender being cooled by means of a cooling medium.

6. Method according to claim 4 or 5, the rotational speed of said screw blender being adjusted according to the temperature in said screw blender.

7. Method according to at least one of claims 1 to 6, said polyurethane gel being further treated under vacuum in the screw blender, before being dimensioned.

8. Method according to at least one of claims 1 to 7, a catalyst being provided in said polyurethane gel in a sub-critical amount, sufficiently low so as not to cause a curing reaction at a temperature of 25°C during a period of at least 10 minutes, and preferably during a period of at least 20 minutes.

9. Method according to claim 8, said catalyst being a tertiary amine catalyst, preferably an amidine.

10. Method according to claim 9, said catalyst comprising 1,8-Diazabicyclo[5.4.0]undec-7-ene (DBU).

11. Method according to at least one of claims 8 to 10, said catalyst being comprised in an amount of 0.005 to 1.000 wt%, relative to the total amount of polyol, preferably between 0.05 and 0.30 wt%.

12. Method according to at least one of claims 1 to 11, a latent catalyst being provided in said polyurethane gel, sufficiently latent so as not to cause a curing reaction at a temperature of 25°C during a period of at least 10 minutes, and preferably during a period of at least 20 minutes.

13. Method according to at least one of claims 1 to 12, said reactive polyurethane gel being activated at a temperature of between 40°C and 100°C.

14. Method according to claim 13, said reactive polyurethane film being cured at a temperature between 70°C to 150°C, preferably between 90°C and 120°C.

15. Method according to at least one of claims 1 to 14, said reinforcing layer being provided between two reactive polyurethane layers, or said reinforcing layer being applied on the side of the reactive polyurethane film located opposite to said first side.

16. Method according to at least one of claims 1 to 15, said textile layer being comprised of a material with a melting point higher than 100°C, preferably higher than 120°C.

17. Method according to claim 16, wherein said textile layer is a knitted, tufted, woven or nonwoven material.

18. Polyurethane layer, preferably polyurethane mat, obtained according to a method according to at least one of claims 1 to 17.

19. Polyurethane mat comprising:
(i) a polyurethane layer obtained by reacting at least a polyisocyanate, at least a polyol and at least a catalyst, and comprising at least a filler, said filler being comprised in an amount of 60 wt% to 85 wt% relative to the total weight of the polyurethane layer, said filler being selected from calcium carbonate, barium sulphate and aluminium trihydrate (ATH) or a combination of two or three of the aforementioned, and calcium carbonate, barium sulphate and/or aluminium trihydrate being provided in an amount of at least 50 wt% relative to the total weight of fillers; and
(ii) optionally, a textile layer on a first side of said polyurethane layer.

20. Polyurethane mat according to claim 19, further comprising a reinforcing layer.

21. Polyurethane mat according to at least one of claims 19 to 20 comprising a textile layer, said textile layer being a carpet.

## Patentansprüche

1. Verfahren zum Herstellen einer Polyurethan-Schicht, die folgenden Schritte umfassend:
(i) Mischen mindestens eines Füllstoffs, mindestens eines Polyisocyanats, mindestens eines Polyols und mindestens eines Katalysators in einem gekühlten Schneckenmischer, wobei der Füllstoff, das Polyisocyanat, das Polyol und der Katalysator bei einer Temperatur unter 40 °C gemischt werden, wodurch ein reaktives Polyurethan-Gel gewonnen wird, wobei der Füllstoff in einer Menge von 60 Gew.-% bis 85 Gew.-%, bezogen auf das Gesamtgewicht des reaktiven Polyurethan-Gels, enthalten ist, wobei der Füllstoff aus Calciumcarbonat, Bariumsulfat und Aluminiumtrihydrat (ATH) oder einer Kombination aus zwei oder drei der Vorgenannten ausgewählt wird, und Calciumcarbonat, Bariumsulfat und/oder Aluminiumtrihydrat in einer Menge von mindestens 50 Gew.-%, bezogen auf das Gesamtgewicht der Füllstoffe, bereitgestellt wird,
(ii) Dimensionieren des reaktiven Polyurethan-Gels in einen reaktiven Polyurethan-Film,
(iii)optional Aufbringen einer Textilschicht auf eine erste Seite des reaktiven Polyurethan-Films,
(iv)Härten des reaktiven Polyurethan-Films, wodurch eine reaktive Polyurethan-Schicht gewonnen wird.

2. Verfahren nach Anspruch 1, wobei der Füllstoff, das Polyisocyanat, das Polyol und der Katalysator bei einer Temperatur zwischen 15 °C und 35 °C gemischt werden.

3. Verfahren nach mindestens einem der Ansprüche 1 bis 2, wobei eine festigende Schicht zwischen der Textilschicht und der ersten Seite des reaktiven Polyurethan-Films aufgebracht wird und keine Verstärkungsschicht auf die Seite des reaktiven Polyurethan-Films aufgebracht wird, die der ersten Seite gegenüberliegt.

4. Verfahren nach mindestens einem der Ansprüche 1 bis 3, wobei der Schneckenmischer ein oder mehrere Thermometer zum Überwachen der Temperatur umfasst.

5. Verfahren nach mindestens einem der Ansprüche 1 bis 4, wobei der Schneckenmischer mittels eines Kühlmediums gekühlt wird.

6. Verfahren nach Anspruch 4 oder 5, wobei die Drehgeschwindigkeit des Schneckenmischers gemäß der Temperatur in dem Schneckenmischer justiert wird.

7. Verfahren nach mindestens einem der Ansprüche 1 bis 6, wobei das Polyurethan-Gel ferner unter Vakuum in dem Schneckenmischer behandelt wird, bevor es dimensioniert wird.

8. Verfahren nach mindestens einem der Ansprüche 1 bis 7, wobei in dem Polyurethan-Gel ein Katalysator in einer subkritischen Menge bereitgestellt wird, die ausreichend gering ist, um bei einer Temperatur von 25 °C keine Härtungsreaktion während einer Zeitspanne von mindestens 10 Minuten und vorzugsweise während einer Zeitspanne von mindestens 20 Minuten zu verursachen.

9. Verfahren nach Anspruch 8, wobei der Katalysator ein Tertiäres-AminKatalysator ist, vorzugsweise ein Amidin.

10. Verfahren nach Anspruch 9, wobei der Katalysator 1,8-Diazabicyclo[5.4.0]undec-7-en (DBU) umfasst.

11. Verfahren nach mindestens einem der Ansprüche 8 bis 10, wobei der Katalysator in einer Menge von 0,005 bis 1,000 Gew.-%, bezogen auf das Gesamtgewicht von Polyol, enthalten ist, vorzugsweise zwischen 0,05 und 0,30 Gew.-%.

12. Verfahren nach mindestens einem der Ansprüche 1 bis 11, wobei ein latenter Katalysator in dem Polyurethan-Gel bereitgestellt wird, der ausreichend latent ist, um bei einer Temperatur von 25 °C keine Härtungsreaktion während einer Zeitspanne von mindestens 10 Minuten und vorzugsweise während einer Zeitspanne von mindestens 20 Minuten zu verursachen.

13. Verfahren nach mindestens einem der Ansprüche 1 bis 12, wobei das reaktive Polyurethan-Gel bei einer Temperatur zwischen 40 °C und 100 °C aktiviert wird.

14. Verfahren nach Anspruch 13, wobei der reaktive Polyurethan-Film bei einer Temperatur zwischen 70 °C und 150 °C gehärtet wird, vorzugsweise zwischen 90 °C und 120 °C.

15. Verfahren nach mindestens einem der Ansprüche 1 bis 14, wobei die Verstärkungsschicht zwischen zwei reaktiven Polyurethan-Schichten bereitgestellt wird oder die Verstärkungsschicht auf die Seite des reaktiven Polyurethan-Films aufgebracht wird, die der ersten Seite gegenüberliegt.

16. Verfahren nach mindestens einem der Ansprüche 1 bis 15, wobei die Textilschicht aus einem Material mit einem Schmelzpunkt von über 100 °C, vorzugsweise über 120 °C, besteht.

17. Verfahren nach Anspruch 16, wobei die Textilschicht ein Gewirk, einen Flor, ein Gewebe oder ein Vlies umfasst.

18. Polyurethan-Schicht, vorzugsweise Polyurethan-Matte, die gemäß einem Verfahren nach mindestens einem der Ansprüche 1 bis 17 gewonnen wird.

19. Polyurethan-Matte, umfassend:
(i) eine Polyurethan-Schicht, die durch Verreagieren mindestens eines Polyisocyanats, mindestens eines Polyols und mindestens eines Katalysators gewonnen wird, und mindestens einen Füllstoff umfassend, wobei der Füllstoff in einer Menge von 60 Gew.-% bis 85 Gew.-%, bezogen auf das Gesamtgewicht der Polyurethan-Schicht, enthalten ist, wobei der Füllstoff aus Calciumcarbonat, Bariumsulfat und Aluminiumtrihydrat (ATH) oder einer Kombination aus zwei oder drei der Vorgenannten ausgewählt wird, und Calciumcarbonat, Bariumsulfat und/oder Aluminiumtrihydrat in einer Menge von mindestens 50 Gew.-%, bezogen auf das Gesamtgewicht der Füllstoffe, bereitgestellt ist, und
(ii) optional eine Textilschicht auf einer ersten Seite der Polyurethan-Schicht.

20. Polyurethan-Matte nach Anspruch 19, ferner eine Verstärkungsschicht umfassend.

21. Polyurethan-Matte nach mindestens einem der Ansprüche 19 bis 20, eine Textilschicht umfassend, wobei die Textilschicht ein Teppich ist.

## Revendications

1. Procédé de production d'une couche de polyuréthane, comprenant les étapes :
(i) mélange d'au moins une charge, d'au moins un polyisocyanate, d'au moins un polyol et d'au moins un catalyseur dans un mélangeur à vis refroidi, ladite charge, ledit polyisocyanate, ledit polyol et ledit catalyseur étant mélangés à une température inférieure à 40 °C, pour ainsi obtenir un gel de polyuréthane réactif, ladite charge étant comprise en une quantité de 60 % en poids à 85 % en poids, par rapport au poids total du gel de polyuréthane réactif, ladite charge étant choisie parmi le carbonate de calcium, le sulfate de baryum et le trihydrate d'aluminium (ATH) ou une combinaison de deux ou trois des susmentionnés, et le carbonate de calcium, le sulfate de baryum et/ou le trihydrate d'aluminium étant fournis en une quantité d'au moins 50 % en poids par rapport au poids total des charges ;
(ii) dimensionnement dudit gel de polyuréthane réactif en un film de polyuréthane réactif ;
(iii)facultativement, application d'une couche de textile sur un premier côté dudit film de polyuréthane réactif ;
(iv)durcissement dudit film de polyuréthane réactif, pour ainsi obtenir une couche de polyuréthane.

2. Procédé selon la revendication 1, ladite charge, ledit polyisocyanate, ledit polyol et ledit catalyseur étant mélangés à une température entre 15 °C et 35 °C.

3. Procédé selon au moins l'une des revendications 1 à 2, une couche de renforcement étant appliquée entre ladite couche de textile et ledit premier côté du film de polyuréthane réactif, et aucune couche de renforcement n'étant appliquée sur le côté du film de polyuréthane réactif situé à l'opposé dudit premier côté.

4. Procédé selon au moins l'une des revendications 1 à 3, ledit mélangeur à vis comprenant un ou plusieurs thermomètres pour surveiller la température.

5. Procédé selon au moins l'une des revendications 1 à 4, ledit mélangeur à vis étant refroidi au moyen d'un milieu de refroidissement.

6. Procédé selon la revendication 4 ou 5, la vitesse de rotation dudit mélangeur à vis étant ajustée selon la température dans ledit mélangeur à vis.

7. Procédé selon au moins l'une des revendications 1 à 6, ledit gel de polyuréthane étant en outre traité sous vide dans le mélangeur à vis, avant d'être dimensionné.

8. Procédé selon au moins l'une des revendications 1 à 7, un catalyseur étant fourni dans ledit gel de polyuréthane en une quantité sub-critique, suffisamment faible pour ne pas provoquer une réaction de durcissement à une température de 25 °C pendant une période d'au moins 10 minutes, et de préférence pendant une période d'au moins 20 minutes.

9. Procédé selon la revendication 8, ledit catalyseur étant un catalyseur d'amine tertiaire, de préférence une amidine.

10. Procédé selon la revendication 9, ledit catalyseur comprenant du 1,8-Diazabicyclo[5.4.0]undéc-7-ène (DBU).

11. Procédé selon au moins l'une des revendications 8 à 10, ledit catalyseur étant compris en une quantité de 0,005 à 1,000 % en poids, par rapport à la quantité totale de polyol, de préférence entre 0,05 et 0,30 % en poids.

12. Procédé selon au moins l'une des revendications 1 à 11, un catalyseur latent étant fourni dans ledit gel de polyuréthane, suffisamment latent pour ne pas provoquer une réaction de durcissement à une température de 25 °C pendant une période d'au moins 10 minutes, et de préférence pendant une période d'au moins 20 minutes.

13. Procédé selon au moins l'une des revendications 1 à 12, ledit gel de polyuréthane réactif étant activé à une température entre 40 °C et 100 °C.

14. Procédé selon la revendication 13, ledit film de polyuréthane réactif étant durci à une température entre 70 °C à 150 °C, de préférence entre 90 °C et 120 °C.

15. Procédé selon au moins l'une des revendications 1 à 14, ladite couche de renforcement étant fournie entre deux couches de polyuréthane réactif, ou ladite couche de renforcement étant appliquée sur le côté du film de polyuréthane réactif situé à l'opposé dudit premier côté.

16. Procédé selon au moins l'une des revendications 1 à 15, ladite couche de textile étant composée d'un matériau présentant un point de fusion supérieur à 100 °C, de préférence supérieur à 120 °C.

17. Procédé selon la revendication 16, dans lequel ladite couche de textile est un matériau tricoté, touffeté, tissé ou non tissé.

18. Couche de polyuréthane, de préférence mat de polyuréthane, obtenu selon un procédé selon au moins l'une des revendications 1 à 17.

19. Mat de polyuréthane comprenant :
(i) une couche de polyuréthane obtenue par réaction d'au moins un polyisocyanate, d'au moins un polyol et d'au moins un catalyseur, et comprenant au moins une charge, ladite charge étant comprise en une quantité de 60 % en poids à 85 % en poids par rapport au poids total de la couche de polyuréthane, ladite charge étant choisie parmi le carbonate de calcium, le sulfate de baryum et le trihydrate d'aluminium (ATH) ou une combinaison de deux ou trois des susmentionnés, et le carbonate de calcium, le sulfate de baryum et/ou le trihydrate d'aluminium étant fournis en une quantité d'au moins 50 % en poids par rapport au poids total des charges ; et
(ii) facultativement, une couche de textile sur un premier côté de ladite couche de polyuréthane.

20. Mat de polyuréthane selon la revendication 19, comprenant en outre une couche de renforcement.

21. Mat de polyuréthane selon au moins l'une des revendications 19 à 20, comprenant une couche de textile, ladite couche de textile étant un tapis.
